# EUROPEAN PATENT APPLICATION

(11) **EP 4 169 603 A1**
(43) Date of publication of application: **26.04.2023**
(21) Application number: 21382947.6
(22) Date of filing: 21.10.2021
(51) Int. Cl.: B01D 53/62, B01D 53/83, B01D 53/08

(54) **CO2 CAPTURE METHOD USING A COUNTERCURRENT MOVING BED REACTOR**

(71) Applicant: Consejo Superior de Investigaciones Científicas (CSIC), 28006 Madrid (ES)
(72) Inventor: ABANADES GARCIA, JUAN CARLOS, 33011 Oviedo (Asturias) (ES); ALVAREZ CRIADO, YOLANDA, 33011 Oviedo (Asturias) (ES)
(74) Representative: Pons

(57) **Abstract**

It is disclosed a method to capture CO₂ from a gas using Ca-containing porous solids composed of Ca(OH)₂ and/or CaO, arranged in a packed bed to contact with the gas. The method comprises the use of a carbonator reactor operated in a countercurrent moving bed mode. Such configuration provides the conditions to generate an autothermal central region in the reactor at optimum carbonation temperature between 600-700ºC when using Ca-containing stones, pellets or extruded bricks with effective diameters or thickness between 1-10 cm and solid residence times between 1 to 20 hours, when treating gases with CO₂ content between 2-25%v. In another embodiment, the method provides optimum conditions for efficient CO₂ capture from gases with CO₂ content below 2%v, including ambient air, at temperatures below 100ºC and relative humidity between 80-100%, to achieve maximum carbonation conversion with solid residence times between 20 to 200 hours.

## Description

### OBJECT OF THE INVENTION

This invention discloses a method to capture CO₂ from a gas using Ca-containing porous solids composed of Ca(OH)₂ and/or CaO, arranged in a packed bed to contact with the gas. The method is characterized by the use of a carbonator reactor operated in a countercurrent moving bed mode. Such configuration provides the conditions to generate an autothermal central region in the reactor at optimum carbonation temperature between 600-700ºC when using Ca-containing stones, or extruded bricks or pellets with effective diameters or thickness between 1-10 cm and solid residence times between 1 to 20 hours, when treating gases with CO₂ content between 2-25%v. In another embodiment, the method provides optimum conditions for efficient CO₂ capture from gases with CO₂ content below 2%v, including ambient air, at temperatures below 100ºC and relative humidity between 80-100%, to achieve maximum carbonation conversion with solid residence times between 20 to 200 hours.

### BACKGROUND OF THE INVENTION

CO₂ capture and permanent storage of CO₂ is a useful climate change mitigation tool to decarbonize fossil-fuel based industries, provide pure CO₂ for industrial uses, or even transform processes into negative emission systems when they are fuelled by biomass, carbon neutral waste or CO₂ directly captured from the atmosphere.

Calcium Looping, CaL, is a CO₂ capture technology that uses CaO (and/or Ca(OH)₂) as regenerable Ca-sorbent of CO₂. The state of the art of the fundamentals properties of the materials, reactor design and process integration of Calcium Looping has greatly progressed in recent years. A wide variety of patents and technical publications have been published to apply Calcium Looping to power plants and industries. For example, US 8226917B2 shows that these materials can carbonate fast (in particular Ca(OH)₂) when in small particle form (i.e. particle diameter of less than 3 mm), at temperatures between 600 and 700ºC and in a wide range of CO₂ concentrations reach a maximum carbonation conversions of between 0.5-0.7. Such limit to the carbonation conversion is known to be limited by porosity (CaCO₃ molecular volume density is 27100 mol/m³, Ca(OH)₂ is 29900 mol/m³ while CaO is 59642 mol/m³) and by the formation of a product layer of CaCO₃ on the internal surface of CaO. The thickness of the product layer is known to decrease with temperature (Y.A. Criado et al, Effect of the carbonation temperature on the CO2 carrying capacity of CaO, Ind. Eng. Chem. Res. 2018, 57, 12595-12599). From a practical point of view, this means that for flue gases with CO₂ content between 1-30%v of CO₂ the maximum level of conversion of 0.5-0.7 is reached when the surface area of the Ca-material is higher than 10 m²/g and the porosity of active Ca-containing material is higher than 0.45.

Calcium Looping processes making use such Ca-containing materials typically use fluidized beds, circulating fluidized bed or entrained beds carbonator reactors, where the Ca-sorbents will typically carbonate in seconds to several minutes while in contact with the gas containing CO₂. Once carbonated, the particles containing CaCO₃ need to be brought to temperatures typically within 900-950ºC to produce CaO (that eventually returns to the carbonator reactor or is purged for cement manufacture or other uses), and a gas stream rich in CO₂ (suitable for purification and disposal or use).

There are also Calcium Looping systems using packed bed reactors, where gases can move through the bed but solids do not move and are not carried or entrained by the gas. All known packed bed Calcium Looping systems work in cyclic stages of reaction, with at least one carbonation stage aimed at the generation of a gas with a low content of CO₂ at the exit of the reactor, until the bed of CaO-containing solids is converted to CaCO₃ and a sharp breakthrough in the gas composition at the exit of the reactor occurs. For example, U.S. Pat. No. 5,509,362 discloses a fuel gas reforming method with steam, using an adiabatic packed bed reactor filled with CaO sorbent, in which the removal of CO₂ forming CaCO₃ shifts the gas reactions towards a higher production of H₂. A subsequent calcination stage of CaCO₃ in the same solid bed is carried out using an oxidation/reduction chemical loop and air, so that CO₂ is emitted to the atmosphere in diluted form. US2012/0164032A1 discloses an adiabatic Calcium Looping system to reduce the carbon content in a syngas using a packed-bed reactor holding a calcium-based sorbent.

Another process to capture CO₂ that uses stagnant solids during carbonation is a system proposed for the direct CO₂ capture from air (Abanades et al., An air CO2 capture system based on the passive carbonation of large Ca(OH)2 structures, Sust. Energ. & Fuels, 2020, 4, 3409-3417), where the carbonation of porous plates or Ca-containing solids of Ca(OH)₂ takes place in the open atmosphere, arranged in vast stationary infrastructures that passively carbonate in weeks to months when left to expose to ambient air. The Ca(OH)₂ porous structures can take virtually any form and, once carbonated, can be transported to a centralised calcination plant to manufactured again the Ca(OH)₂ while producing pure CO₂. Mortars containing Ca(OH)₂ have been extensively used in construction from Roman times, usually mixed up with other materials to enhance mechanical and other properties. The porosity of Ca(OH)₂ mortars when settled and dry can be high (between to 0.5-0.7) and this allows almost complete carbonation in ambient air. However, the carbonation mechanism of Ca-containing solids at low temperatues (from ambient air to 100ºC) is known to be different than at 600-700ºC referred above for Calcium Looping applications. Beruto et al (Liquid-like H2O adsorption layers to catalyze the Ca(OH)2/CO2 solid-gas reaction and to form a non-protective solid iroduct layer at 20°C. J. Eur. Ceram. Soc. 2000, 20 (4), 497-503) show the need of high relative humidity (80-100%) in the gas to promote fast carbonation of Ca(OH)₂. On the other hand, when Ca(OH)₂ is flooded in liquid water (for example Ca(OH)₂ as "lime putty" used in the builing industry), the carbonation rates become again extremely slow. In these conditions, the carbonation rate of Ca(OH)₂ dry porous mortars , or other structures containing Ca(OH)₂, is governed by CO₂ gas diffusion through the open pores, with a carbonation front moving inwards from the external surface of the porous Ca-containing solids. It must be noted that direct carbonation of CaO at ambient temperatures is so slow that it cannot have practical applications. CaO carbonation in humid air is first converted to Ca(OH)₂ by hydration and then form CaCO₃.

An example of an existing industrial application of passive carbonation of Ca(OH)₂ to capture CO₂ from air, or vitiated air, comes from the need to remove CO₂ in fruit stores to extend the lifetime of the fruit. A porous bed of Ca(OH)₂ in powder form is located inside porous bags for this purpose (FRUITCAL^{®} http://www.carmeuse-agriculture.com/our-products/fruitcal). The bags are simply replaced when fully carbonated. Curing of lime mortars and other cementitious materials containing Ca(OH)₂ by the CO₂ contained in air, or accelerated curing with gases containing CO₂, is also part of the state of the art in the manufacture of extruded bricks or other prefabricated construction structures of a variety of shapes.

Finally, a recent paper (Lisbona et al. Technoeconomic feasibility study of cement plants as reference facilities for centralized CO2 capture in industrial sites; 15th International Conference on Greenhouse Gas Control Technologies, GHGT-15, 15th-18th March 2021, Abu Dhabi, UAE) proposes the use of centralized cement plants with CO₂ capture (for example by oxycombustion in the calciner fed with CaCO₃) as centralized producers of CaO-containing solids, that are then transported (at temperatures close to ambient temperature) to an industrial site to be carbonated in a carbonator reactor operating at around the optimum temperature for Calcium Looping carbonation, i.e. around 650ºC. The CaO must be transported at close to ambient temperature and the resulting carbonate requires cooling before being transported for regeneration in the cement plant. Such carbonator is therefore energy and resource inefficient, because it needs arranging additional heat exchanging steps to preheat the CaO-containing solids, the stack flue gases (usually emitted at temperatures below 150ºC) and to recover the energy released in the carbonator or when cooling the carbonated solids exiting the carbonator. Such level of thermal integration may be uneconomic for many industrial applications of relatively small scale, served by the decentralized CO₂ capture carbonation method. A higher level of energy efficiency and compactness would be desirable for such decentralized carbonation method, combined with centralized regeneration to produce CO₂. Indeed, in all applications mentioned above, when the CO₂ sorbent and the resulting carbonate need to be transported at ambient temperature from the regeneration plant to the CO₂ capture plant and vice versa, it would be desirable to have a CO₂ capture method by carbonation being highly energy efficient and economic when preheating and cooling reactants and products from carbonation taking place at optimum temperatures around 650ºC. Alternatively, it would be desirable to be able to operate the carbonator at low temperatures, so that transport of sorbent Ca-materials and CaCO₃ product would feasible without expensive and energy inefficient heating and cooling steps.

In this context, it is interest for this invention to note the widespread commercial availability of vertical shaft kilns of limestone to produce porous CaO, with the highest energy efficiencies and lowest footprint. This is achieved in lime kilns by arranging the solids and the gases to move in countercurrent mode in a moving bed apparatus, so that the hot gases leaving the calcination zone (which is overall exothermic because of the firing of a fuel in air to drive the endothermic calcination reaction) preheat the solids entering at ambient temperature at the top of the kiln and the hot solids moving downwards from the calcination zone preheat the air flowing upwards towards the burning zone (H. Piringer, Lime Shaft Kilns, Energy Procedia 120, 2017, 75-95). These moving beds kilns can treat large stones of limestone and lime (from 1 to 15 cm of diameter) to minimise gas pressure drop. They also provide solid residence time of the solids as long as 24 hours, which are needed to achieve the desired calcination degrees of the stones and the effective heat transfer between the gases and the solids in the preheating regions of gases and solids surrounding the calcination zone. In contrast, the gases reside in the kiln less than 20 seconds, moving upwards at superficial gas velocities of 1-3 m/s at the conditions of the calcination zone. The design techniques of cocurrent and countercurrent moving bed reactors are well known, and there are recent moving bed reactors applications in the CO₂ capture field, using special materials and set ups for effective adsorption of CO₂ by the solids (Mondino et al., Moving bed temperature swing adsorption for CO2 capture from a natural gas combined cycle power plant, International Journal of Greenhouse Gas Control, 85, 2019, 58-70)

From the previous review of the state of the art, it can be concluded that despite recent advances developing Calcium Looping CO₂ capture methods at high temperatures (using 600-700ºC for carbonation and 900-950ºC for calcination), and the industrial experience related to the producing of porous CaO and Ca(OH)₂ materials in stone or Ca-containing solids form, or in the form of porous mortars of Ca(OH)₂ of different shapes, or even in the form of porous bags of Ca(OH)₂ material for passive carbonation in contact with air, there is a lack of techno-economically viable and energy efficient CO₂ carbonation methods when the Ca-containing solids entering the carbonator are at low temperature and the exiting carbonated solids must be also at low temperatures (i.e. for transport to a centralized calciner). Decoupling the CO₂ capture step (i.e. by carbonation of low cost sorbent containing Ca(OH)₂ and CaO) from the sorbent regeneration stage (i.e. by calcination of CaCO₃ to produce pure CO₂ and regenerate the sorbents) opens up new opportunities for novel CO₂ capture methods. Such methods of capture of CO₂ by carbonation could find a wide range of applications, from flue gases at stack temperatures emitted from industries and freight transport to CO₂ capture from air. This patent discloses such a method of CO₂ capture by carbonation.

### DESCRIPTION OF THE INVENTION

This invention discloses a method to capture CO₂ from a gas entering a thermally insulated packed bed reactor of Ca-containing solids composed of CaO, Ca(OH)₂ or mixtures thereof, that can react to form CaCO₃ and obtain a gas depleted in CO₂ at a reactor gas exit; said solids arranged in the form of porous Ca-containing solids, such as lime rocks, extruded bricks or plates made with mortars, or porous bags containing the Ca-containing solids in powder form, to avoid their entrainment into the gas; said solids having, when calcined, internal porosities connected to the exterior surface of the solids ranging between 0.45-0.7 and internal surface areas higher than 10 m²/g. Such properties allow a maximum molar carbonation conversion of CaO and Ca(OH)₂ higher than 0.5, at optimum temperatures of carbonation of 600-700ºC or at ambient temperature as long as there is 80-100% humidity in the air. The method being characterized by:
i. feeding the Ca-containing solids to the gas exit of the reactor at a molar rate of 1- 2 times the molar rate of CO₂ contained in the gas;
ii. discharging the CaCO₃-containing solids from a gas inlet of the reactor such that a countercurrent movement of the gas respect to the solids is generated;
iii. providing a residence time to the solids in the reactor between 1-200 hours. As will be revealed by experiments and simulations discussed below, this wide range in residence times is because the method will target gases with a content of CO₂ as high as 25%v to ambient air (with just about 500 ppmv CO₂), that will require the longest residence times in the interval. The operations of solid feeding (i) and discharging (ii) to the reactor may be continuous or in step-wise mode when handling batches of Ca-containing solids, as long as the residence time of the solids in the reactor is provided (iii).

Other adiabatic moving bed reactors to carry out other gas-solid reactions, in particular lime shaft kilns for limestone calcination as they use similar materials, give important guidelines on preferred embodiments of this invention. The estimation of axial temperature and gas concentration profiles of a countercurrent moving bed reactor can be carried out with reactor-design equations, once the effective kinetics of carbonation are experimentally determined for a given local concentration of CO₂, particle size, open porosity and specific surface area of the Ca-containing solids. It can be shown that the countercurrent gas-solid arrangement and the exothermic carbonation of the solids tends to generate a high temperature reaction zone, reaching a maximum Tₘₐₓ that is located towards the axial central region of the reactor. For a vertical reactor, solids fed at the top of the reactor, move downwards by gravity and heat up in contact with the hot gases evolved in the carbonation reaction zone. Solids are discharged at the bottom of the reactor after being cooled down due to the contact with the gases coming up towards the reaction zone. Preheating and cooling of gas and solid reactants is known to be effective in lime kilns, therefore a preferred embodiment of the method uses Ca-containing solids having an effective particle diameter or thickness between 10 to 100 mm and their residence time in the reactor is between 1-20 hours. These ranges of particle diameters or thickness and residence times will be shown to be most adequate to achieve at least 80% of CO₂ capture efficiency on gases containing volume fractions of CO₂ higher than 0.02.

When applying the method at close to atmospheric pressure, it is important for maximizing the CO₂ capture efficiencies that the operating conditions of the method are such as to avoid the maximum temperature in the central carbonation region to exceed Tₘₐₓ>700ºC, because the CO₂ partial pressure of CO₂ at such temperature is 0.03 atm (and increases rapidly with temperature, with 0.08 atm at 750ºC). It is also important that the conditions are such as to avoid Tₘₐₓ<600ºC, because at lower temperatures the utilization of the sorbent (defined in the state of the art as Xₘₐₓ or maximum CO₂ conversion of the Ca material at the end of the kinetically fast carbonation period) is lower than 0.5. The value of Tₘₐₓ depends among other factors on the inlet temperature of the flue gas entering the carbonator and the CO₂ content. In the case of CaO, the high enthalpy of carbonation demands that the volume fraction of CO₂ does not exceed 0.1. Such volume fraction limit is 0.125 for Ca(OH)₂ because of its lower carbonation enthalpy. In contrast, for volume fractions of CO₂ below 0.02 it would be necessary to feed the gases at increasingly high temperatures approaching the target Tₘₐₓ being close to the 650ºC, usually considered optimum carbonation temperature in the state of the art.

The solutions of the mass and energy balances in the countercurrent carbonator reactor that will be provided below indicate that when the Ca-solid is CaO, the optimum objective of 600ºC< Tₘₐₓ<700ºC is achieved when the gas is a flue gas with CO₂ volume fraction between 0.02 and 0.1, and the inlet temperature of the gas follows a proportionality rule given by a value of 560ºC±40ºC when the volume fraction is 0.02 and a value of ambient temperature ±10ºC when the volume fraction is 0.1.

When the solids are Ca(OH)₂, the optimum objective of 600ºC< Tₘₐₓ<700ºC is achieved when the gas is a flue gas with CO₂ volume fraction between 0.04 and 0.12, and the inlet temperature follows a proportionality rule given by a value of 550ºC ±30ºC when the CO₂ volume fraction is 0.04, and a value of ambient temperature ±10ºC when the volume fraction is 0.12. When the solids are a mixture of CaO and Ca(OH)₂, the optimum objective of 600ºC< Tₘₐₓ<700ºC is achieved when the inlet gas temperature and CO₂ concentration follow the proportionality rules of the previous two sentences in proportion to the molar fractions of CaO and Ca(OH)₂.

The solution of mass and heat balances in the countercurrent moving bed carbonator also indicate that when treating gases volume fraction of CO₂ lower than 0.125, as indicated in the previous paragraphs, the difference between the gas temperature at the exit of the reactor and Tₘₐₓ becomes smaller. Therefore, a preferred embodiment of this method, when the incoming gas requires a heat input to put it at the correct inlet temperature to be able to make Tₘₐₓ between 600-700ºC, is further characterized in that the gas discharged from the reactor enters a heat exchanger to supply heat to the gas fed to the reactor.

When the solids are CaO, moving in countercurrent mode respect to a gas with CO₂ volume fraction between 0.1 and 0.25 the method is further characterized by the spraying of water at the high temperature region located in the central part of the reactor, to limit the maximum carbonation temperatures, Tₘₐₓ, to between 600-700ºC, preferably around 650ºC. Note that this action of spraying water is needed even if the temperature of the gas entering the carbonator is at ambient temperature.

In another preferred embodiment with the same objective (i.e. cooling the central carbonation region in the reactor) the gas is a flue gas with CO₂ volume fraction between 0.1 and 0.25, the method is further characterized by the mixing of the flue gas with ambient air to bring the resulting gas mixture to the conditions described above for CO₂ volume fraction lower than 0.1.

Similarly as above, the methods of cooling by spraying water and/or by diluting the inlet gas with air are applied when the solids are Ca(OH)₂ or mixture of CaO and Ca(OH)₂, depending on the cooling requirements as illustrated in the examples and detailed description below.

To facilitate rapid scale up, methods described in the previous paragraphs use as much as possible mechanical similarities with current lime kilns. Therefore, all methods described so far using countercurrent carbonator reactors are further characterized by an inlet gas velocity at the gas entrance of the reactor between 0.5-1 m/s measured at normal conditions. This choice supports the assumptions of effective heat transfer between the gases and the solids moving in countercurrent mode that allows for the high energy efficiencies during the CO₂ capture by carbonation from solids at close to ambient temperature, and having to produce carbonated solids also at a temperature close to the ambient.

As noted above, the equilibrium of CO₂ on CaO does not allow for high CO₂ capture efficiencies when the concentration of CO₂ in the gas is low (i.e. below the treshold marked in previous paragraphs at a CO₂ volume fraction of 0.02). Therefore, operation of the method targeting maximum temperatures in the carbonation zone, Tₘₐₓ, below 100ºC are preferred for gases with volume fraction of CO₂ lower than 0.02, where it is known in the state of the art that Ca(OH)₂ can achieve high carbonation conversion under the right reaction conditions and gas-solid contact times. In these conditions, Ca(OH)₂ is also the preferred material and operating conditions must be such as to have in the central carbonation region of the reactor a high relative humidity in the gas while avoiding the formation of liquid water that could flood the Ca(OH)₂ pore network, drastically slowing down the carbonation rates and making the method impractical. After investigating materials and reaction conditions as described below, a preferred embodiment of the method is when the gas is air at ambient temperature, where the solids are Ca(OH)₂, preferably with a surface area higher than 30 m²/g, the gas is a flue gas with volume fraction between 0.005 and 0.04 and temperature between ambient temperature and 70ºC further characterized by water spraying at the gas inlet and in the central part of the reactor carbonation zone to maintain maximum temperatures below 70ºC and relative humidity between 80-100%.

In a similarly preferred embodiment, the gas is humidified air at ambient temperature, with CO₂ content between 400-500 ppmv, or vitiated air or flue gases at close to ambient temperature with a CO₂ content between 500 to 5000 ppmv and relative humidity between 80-100%, entering the reactor at 5-10 m/s, and the solids are Ca(OH)₂ preferably with a surface area higher than 30 m²/g, contained in the form of honeycombs, extruded bricks, plates or bags with a geometry to allow an effective depth of the carbonated layer of 1-10 mm. The emphasis on high velocities and solid forms offering low pressure drop is necessary to accommodate the vast flows of air required to capture meaningful flow rates of CO₂ for climate change mitigation purposes. The use of known porous solids in the method of this invention, in a form that cannot entrain into the gas, facilitates CO₂ capture devices from ambient air with a lower footprint (i.e., lower cross-sections). Indeed, a preferred embodiment that will make the method more economical and energy efficient is when the porous Ca-containing solids are fed to the moving bed carbonator reactor device in an extruded or molded form so that the CaCO₃ containing solid product is a cured product that can enter the market of prefabricated construction materials. This is because the cost and energy dedicated for extruding and shaping the Ca-containing solids would no longer be allocated to the method to capture CO₂, as they would be recovered from the sales of the product and the substitution of existing market products with intense energy consumption and higher carbon footprint.

Optionally, the method further comprises a step of estimation of a residence time required to achieve the target carbonation conversion of the Ca-containing solids.

When the range of CO₂ concentrations in the inlet gas is between 500 ppmv (air) to 25%v, and the temperature between of CO₂ between 20-650ºC T_{g,in} and, the step of estimation of a residence time required to achieve the target carbonation conversion of the Ca-containing solids comprises the following steps:
- a step of estimation, from the carbon mass balance, of the flow of solids to capture the targeted flow of CO₂ from the inlet gas;
- a step of calculation of a first energy balance to estimate the outlet temperature T_{g,out} of the gas depleted in CO₂ generated in the reactor leaving the reactor as sensitive heat in the gas depleted in CO₂ assuming that the carbonated solids leave the reactor at the same temperature as the gas at the inlet gas enters the reactor;
- a step of calculation of a second energy balance to estimate a maximum temperature Tₘₐₓ, attainable in a carbonation zone located in a central part of the reactor, considering the outlet temperature T_{g,out} of the gas depleted in CO₂ of the step of calculation of the first energy balance, and assuming that the solids leave the reactor at the inlet temperature of the gas, i.e.: T_{s,out}=T_{g,in}.
- a step of estimating a required length of the carbonation zone with a kinetic model for such temperature for the chosen properties of the Ca-containing solid acting as CO₂ sorbent.

The method of this invention requires of particular carbonator reactors. In a preferred embodiment, such device to carry out the methods described above dealing with CO₂ volume fractions higher than 0.02 are characterized by a supply line of Ca-containing solids containing CaO or Ca(OH)₂ of mixture thereof, a discharge line of CaCO₃ containing solids, a supply line of gas containing CO₂ connected to the discharge line of CaCO₃-containing solids and a discharge line of gas depleted in CO₂ that is connected to the supply line of Ca-containing solids to the reactor. The Ca-containing solids move downwards by gravity in a moving bed of solids that is kept under adiabatic conditions by a refractory wall covered by a wall. There are means to control the charge and discharge rate of solids, such as solid valves, to set a residence time of the solids at between 1-20hours.

In another preferred embodiment, the device to carry out the methods described above dealing with CO₂ volume fractions lower than 0.02 are characterized by a supply line of Ca(OH)₂, a discharge line of CaCO₃ containing solids, a supply line of air or vitiated air connected to the discharge line of CaCO₃-containing solids and a discharge line of air depleted in CO₂ that is connected to the supply line of Ca-containing solids to the reactor. Ca-containing solids move from one end to the other of the device, or the device wall has means to move respect to the solids. The rate of charge and discharge of solids in and out the reactor allows the control of the residence time of the solids at between 20-200 hours. The need to accommodate large flow rates of air to capture meaningful quantities of CO₂ from the atmosphere, demands for preferred embodiments where this device has a cross-section between 0.1 to 0.2 times the flow rate in Nm³/s, and the bed porosity is between 0.6-0.8, so as to minimize pressure drop while maintaining sufficient inventory of solids in the reactor to sustain residence times between 20-200 hours.

### BRIEF DESCRIPTION OF THE DRAWINGS

A set of drawings is attached wherein, with illustrative and non-limiting character, the following has been represented:

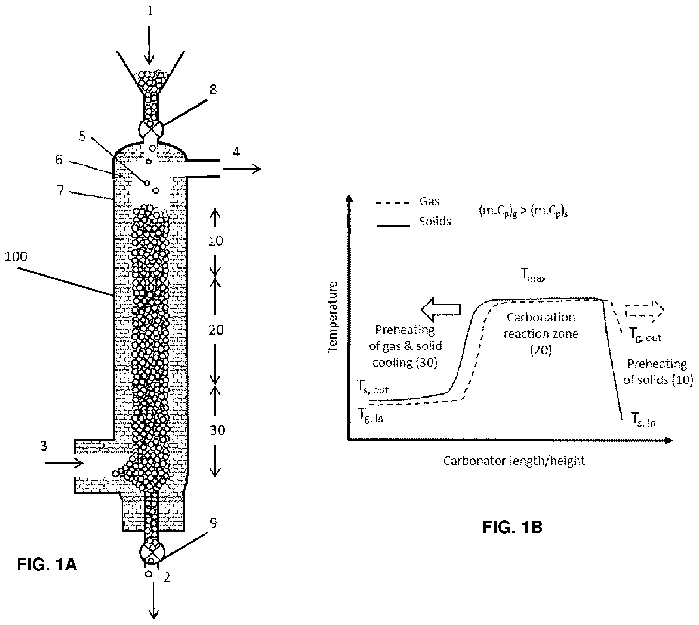

**Figure 1A****:** general scheme of the method of this invention comprising a moving bed reactor of Ca-containing solids (white circles) containing CaO or Ca(OH)₂ that moves downwards while contacting with a gas moving upwards. The exothermic carbonation of the solids generates a central carbonation reaction region, where both gas with CO₂ and the Ca-containing solids arrive preheated in gas-solid heat exchange zones by the carbonated solids and the gas depleted in CO₂, respectively. **Figure 1B****:** Qualitative plot of axial temperature profiles in the adiabatic moving bed reactor of Figure 1A.
**Figure 2A****.** Model simulation results of the axial concentration profiles of CO₂ in the gas phase (solid lines) and carbonate molar fraction (dotted lines) in a countercurrent (11.3 m long) carbonator reactor. **Figure 2B****.** Model simulation results of the axial concentration profiles of CO₂ in the gas phase (solid lines) and carbonate molar fraction (dotted lines) in a cocurrent (25 m long) carbonator reactor.
**Figure 3****.** Plots of carbonate conversion vs time in Ca-containing solids of Ca(OH)₂ and CaO and effective particles diameters (dₚ) of 2 and 10 cm using the shrinking core model with control of CO₂ gas diffusion through the open porosity of the external carbonated layer of the Ca-containing solids.
**Figure 4****.** Experimental plots of molar conversion to CaCO₃ during carbonation of CaO (after one calcination from limestone) at different temperatures (from Y. Criado et al. 2018).
**Figure 5****.** Solutions of the heat balance to achieve a maximum temperature, Tₘₐₓ=650ºC, in the autothermal carbonation region of the reactor in a countercurrent reactor, as a function of initial CO₂ volume fraction and inlet gas temperature.
**Figure 6****.** Method using the heat content in the product gas depleted in CO₂ to preheat the inlet gas.
**Figure 7****.** Method using spraying water to cool the carbonation zone.
**Figure 8****.** Method using air to reduce the CO₂ content in the inlet gas and reduce the maximum temperature of the autothermal carbonation zone.
**Figure 9****.** Representation of the extruded Ca-containing solids of Ca(OH)₂ used in Example 2.
**Figure 10****.** Experimental carbonation conversion vs time of CaO in dry air (0% relative humidity, RH) and in 95%RH at 65 ºC. 20 mg of sample in a thermogravimetric analyzer.
**Figure 11****.** Experimental carbonation conversion vs time of Ca(OH)₂ in dry air (0%RH) and other RH values at 65 ºC and 5%v of CO2. 11-12 mg of sample in a thermogravimetric analyzer.
**Figure 12****.** Experimental carbonation conversion vs time of Ca(OH)₂ at different temperatures. Bed of commercial high surface Ca(OH)₂ in the form of a dry mortar pellet of 1.5 cm diameter and height embedded in a crucible with only the top surface exposed to the gas. 12%v CO₂ saturated in water vapour (100%RH).
**Figure 13****.** Experimental and predicted values of the depth of the carbonated layer in a Ca-containing solids of Ca(OH)₂ when exposed to ambient air (450-550 ppmv) at 40-60%RH and temperature between 18 and 22 ºC.
**Figure 14****.** Experimental crushing strength measured at different molar conversion to CaCO₃ of dry Ca(OH)₂ cylindrical porous pellets of 5.5 mm diameter and height, carbonated when exposed to ambient air (450-550 ppmv) at 100%RH and temperature between 18 and 22 ºC.
**Figure 15****.** Method of this invention to capture CO₂ from humid air.

### PREFERRED EMBODIMENTS OF THE INVENTION

The main characteristics of the method disclosed in this invention are conceptually represented in Figure 1A. The objective of the method is to capture the CO₂ that is diluted in gas. Ca-containing solids (5) containing active CaO and/or Ca(OH)₂ (1) are known to be able to carbonate at optimum temperatures between 600-700ºC in contact with the CO₂ to form CaCO₃, reaching maximum calcium molar conversions between 0.5 to 0.7 when the specific surface area of the solids is higher than 10 m²/g, so as to allow sufficient build-up of a thin carbonate layer in the interior of the Ca-containing solids. On the other hand, porous Ca(OH)₂ is also know to carbonate up to calcium molar conversions exceeding 0.9, even in ambient air, in particular when relative humidity is higher than 80%. Taking into account these optimum carbonation conditions, different preferred embodiments of this method are defined, depending on the CO₂ concentration and temperature of the gas to be treated, so that optimum conditions are reached in the carbonator reactor used for efficient CO₂ capture by carbonation.

Preferred embodiments of the method apply to the capture of CO₂ from a flue gas, or other industrial gas with CO₂ concentrations between 2-25%v, targeting a carbonation temperature between 600º-700ºC in the central region of the carbonator. For applications where the flue gas is emitted at less than 200ºC from an industrial source, and the Ca-containing solids are being transported at ambient temperature to the capture site, a first challenge is to reach said targeted carbonation temperature in the carbonation zone. It will be shown below that countercurrent gas-solid contact mode of the method of this invention allow the definition of certain operating windows that can reach said optimum carbonation temperatures using only the heat released during carbonation. This is therefore highly energy efficient, as no other external sources of energy are needed to preheat incoming reactant streams, and leads to highly compact reactor designs resembling high energy efficient lime kilns, that have similar gas-solid heat exchange or preheating zones (10, 30), a first preheating zone (10) and a second preheating zone (30). In this context, the countercurrent gas flow arrangement in the carbonator reactor (100) is an essential feature of the method disclosed in this invention, because it can be demonstrated that an autothermally generated carbonation zone (20) at high temperature can reach said optimum temperatures for the effective capture of the CO₂ by the carbonation of the Ca-containing solids located in such zone. This is because a preheating zone (10) at the top of the reactor (100) is formed, where the solids (1) coming in at ambient temperature are heated by the gas depleted in CO₂ (4) flowing upwards from the carbonation zone (20) at high temperature of the reactor (100). Similarly, the reactor (100) comprising an inlet gas (3) wherein the gas is preheated in a region (30) by contacting with the high-temperature solids leaving the carbonation zone (20) at high temperature, preferably a central region, of the reactor (100) and, as a result, the solids abandoning the reactor (100) are cooled down, as needed in applications where the carbonated solids (2) are disposed or transported to a centralized regeneration plant to obtain pure CO₂ from decomposition of CaCO₃. Figure 1B includes a qualitative description of the axial temperature profiles in the reactor (100) used in the method of this invention, for a case where the heat carrying capacity of the gas (expressed as the product of mass flow rate of gas and heat capacity (mCp)_{g}) is larger than the heat carrying capacity of the solids (expressed as (mCp)ₛ).

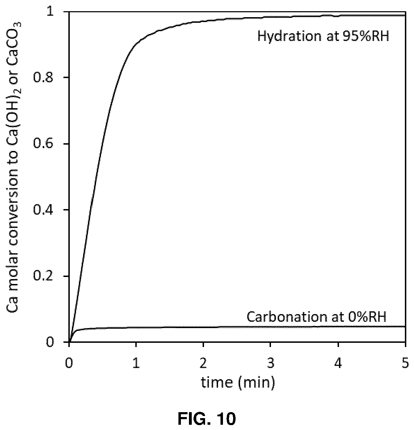

To undertake a quantitative demonstration of the benefits of the method of the present invention, and to select the preferred embodiments and methods for this invention, a simplified moving bed reactor model has been solved, together with dedicated experiments and simulations to characterize the characteristic operating conditions in the method to reach optimum reaction conditions in the carbonation zone (20) at high temperature. The main assumptions to build quantitative estimations of reactor (100) performance are as follows:
- The reactor is adiabatic and both gas and solids move in plug flow in countercurrent mode.
- Heat transfer between solids and gases is of sufficient quality so that temperature difference between gas and solids is assumed to be negligible inside the reactor (100), with step changes in temperature between gas-solid heat exchange or preheating zones (10, 30) and carbonation zone (20) at high temperature.
- The rate of carbonation reaction follows the shrinking core model, controlled by the diffusion of CO₂ through the gas phase occupying the voids in the external carbonated layers of the Ca-containing solids, with an effective diffusivity of CO₂ that is the product of the diffusion coefficient of CO₂ at the temperature of the Ca-containing solids (estimated from Perry's handbook correlations) and the porosity of the carbonated layer of the Ca-containing solids.
- The molar conversion of Ca(OH)₂ to CaCO₃ is assumed to be 0.6 in the external layer of carbonated Ca-containing solids, when the carbonation temperature is between 600-700ºC (i.e. consistent with maximum carbonation conversion of lime resulting from a first calcination of limestone, as reported in the state of the art of Calcium Looping CO₂ capture systems). The molar conversion is assumed to be 0.9 (see Figures 10-12) when the solids are Ca(OH)₂ and the temperature of operation is below 100ºC and the relative humidity above 80%.

Using the previous set of assumptions, it is possible to solve the mass and energy balances in the three main zones (10, 20, 30) of the reactor (100) of Figure 1A, to identify thermodynamic constrains (i.e., limits to the reaction by the known equilibrium equations of CO₂ on CaO leading to inefficient utilization of the sorbent by incomplete carbonation in the carbonation zone (20) at high temperature). Also, to target optimum operating conditions as a function of inlet gas (3) compositions and temperatures and Ca-solid characteristics (mainly diameter, porosity and composition of the Ca-containing solids).

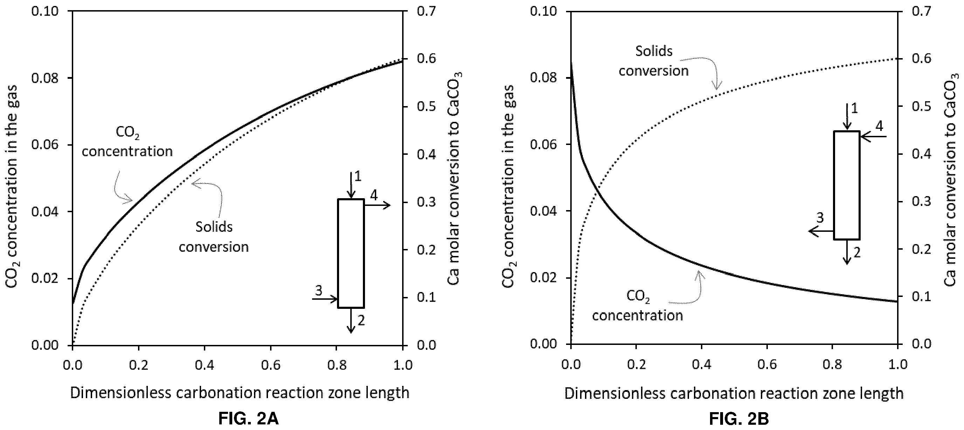

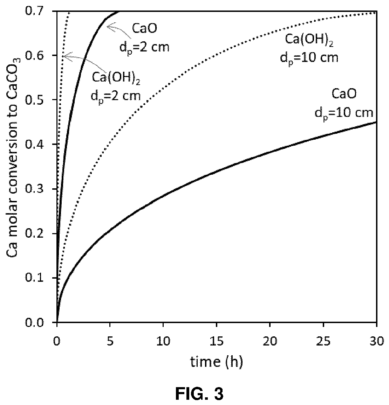

When the kinetics of carbonation are known, the model allows to calculate the length of the carbonation zone (20) at high temperature, as the product of the superficial velocity of the moving solids and the residence time needed to achieve a targeted CO₂ solid conversion. Figure 2A shows an example of the reactor model capabilities to predict the axial CO₂ concentration profile in the gas and the solid conversion profile assuming the kinetic of Figure 3. Figure 2B shows similar predictions when the method uses a cocurrent gas-solid contact mode at the same assumed temperature of carbonation (650ºC in this particular example) and at the same boundary conditions. The length of the carbonation zone (20) at high temperature is 11.3 m long when using a countercurrent gas-solid mode and 25 m long when using a cocurrent moving bed reactor, indicating an additional advantage of the countercurrent gas-solid contact mode of the carbonator reactor used in this invention.

Figure 3 shows an example of predictions from the shrinking core kinetic model used to solve the reactor model used for Figure 2A. These examples are based on a well-known control of the progress of carbonation by Fick's diffusion law in porous Ca-materials of large diameter (i.e., characteristic carbonation lengths> 1 cm) at optimum temperatures of carbonation of 650ºC. As shown in the example, Ca-containing solids having an effective particle diameter or thickness between 10 to 100 mm are able to reach their carbonation conversion close to their maximum (0.5-0.7 at temperatures between 600-700ºC) when in contact with a wide range of CO₂ content in the gas, as long as there is gas-solid contact time of between 1-30 hours.

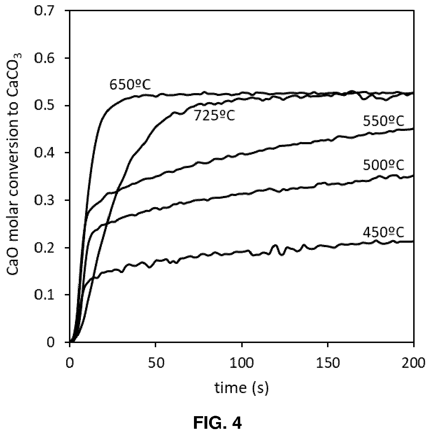

Figure 4 shows experimental results of carbonation of CaO derived from a single calcination of a typical limestone. Figure 4 is also known in the state of the art, but it has been brought here to highlight the fact that in order to achieve a maximum utilization of the sorbent (i.e., maximum of molar conversion of Ca to CaCO₃) it is essential that temperatures in the carbonation zone (20) at high temperature are higher than 550º. On the other hand, note that the partial pressure of CO₂ is 0.03 atm at 700ºC and hence, CO₂ capture efficiencies will sharply decrease at temperatures exceeding 700ºC. Therefore, the operating conditions of the method of this invention should be such as to be able to reach carbonation temperatures in the carbonation zone (20) at high temperature around 650ºC (±50ºC). The challenge is therefore to find conditions for the method adequate to achieve known optimum carbonation temperature of around 650ºC in the carbonation zone (20) at high temperature of Figure 1A.

Since the use of moving bed reactors for CO₂ capture by carbonation as in Figure 1A has not been disclosed before, we have solved this design problem for a wide range CO₂ concentrations in the inlet gas (3), i.e. between 500 ppmv (air) to 25%v, and temperature between 20-650ºC T_{g,in ,} following the following procedure:
- Estimate from the carbon mass balance the flow of solids (1) to capture the targeted flow of CO₂ from the inlet gas (3). Preferably, this has been done considering between 80-90% capture efficiency for industrial applications and 50% for CO₂ capture from air, and considering that all the heat generated in the reactor must leave the adiabatic reactor as sensitive heat in the gas depleted in CO₂ (4), T_{g,out}.
- Solve a first energy balance to estimate the outlet temperature of the gas depleted in CO₂ (4) generated in the reactor leaving the adiabatic reactor as sensitive heat in the gas depleted in CO₂ (4). This is because in all capture applications considered in this invention the heat carrying capacity of the gases (expressed as the product of mCp in Figure 1B) is much larger than the heat carrying capacity of the solids. As a result, the carbonated solids (2) are assumed to leave the reactor at the same temperature as the gas at the inlet gas (3) entering the reactor (100).
- Solve a second energy balance to estimate the maximum temperature attainable in the carbonation zone (20) at high temperature, Tₘₐₓ, considering that T_{g,out} is known from the previous calculation point, and assuming that the solids leave the reactor (100) at the inlet temperature of the gas T_{s,out}=T_{g,in}. As it is the case for other moving bed reactors undertaking exothermic reactions, the solution of such heat balance reveals that the temperature in the carbonation zone could escalate to values well above 700ºC under many conditions (i.e., inlet flows of gases with high CO₂ content and temperatures) if no other restrictions are applied (such as equilibrium).
- Once the temperature Tₘₐₓ in the carbonation zone (20) at high temperature is calculated, the required length of the carbonation zone (20) at high temperature can be estimated with the kinetic model for such temperature (see example in Figure 3), for the chosen properties of the Ca-containing solid acting as CO₂ sorbent. This allows an estimation of the residence time required to achieve the target carbonation conversion of the Ca-containing solids.

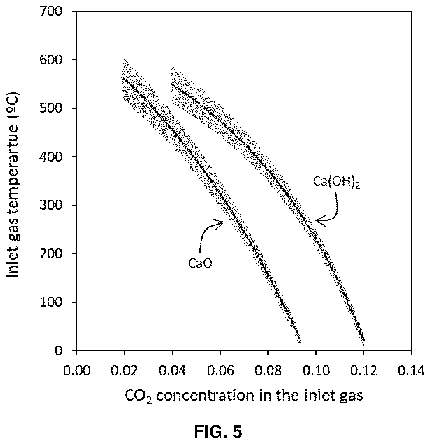

With the reactor model solved as noted above, it has been possible to generate preferred operating windows (combinations of inlet temperature and CO₂ composition of the inlet gas (3)) to target an optimum temperature in the carbonation zone of about 650ºC, that should lead to optimum utilization of the sorbent (Ca-conversions to CaCO₃ between 0.5-0.7). Figure 5 summarizes the results of such analysis for a system fed with Ca-containing solids (1) made with CaO or with Ca(OH)₂ with CO₂ carbonation conversions of 0.6. Each point located in the solid lines indicate an optimum combination of inlet temperature and CO₂ volume fraction in the inlet gas (3) entering the reactor (100) to reach in the carbonation zone (20) at high temperature, the optimum temperature of 650ºC. The line on the left refers to cases where CaO is the only material in the solids (1) and the line on the right refers to cases where Ca(OH)₂ is the only material in the solids (1). Grey bands have been added to both lines to simply cover with a ±50ºC interval the temperatures around 650ºC and just ±10ºC interval the temperature around ambient conditions. Although the relationship is not fully linear, it is clear from this analysis when the Ca-containing solids to be carbonated are made of CaO, and the targeted gas is a flue gas with CO₂ volume fraction between 0.02 and 0.1, the inlet temperature of the gas should be higher when the volume fraction of the gas is low and lower when the CO₂ content of the gas is high. Indeed, the results indicate a proportionality rule given by a value of 560ºC±40ºC when the volume fraction is 0.02 and a value of ambient temperature ±10ºC when the volume fraction is 0.09 to 0.1. This means that the method of this invention will generate an optimum temperature in the carbonation region of between 600-700ºC by simply preheating or cooling the inlet gas to fit the rule given above and in Figure 5. A similar analysis yields a similar proportionality rule, when the solids (1) are Ca(OH)₂ and the inlet gas (3) is a flue gas with CO₂ volume fraction between 0.04 and 0.125, its inlet temperature should be adjusted to follows a proportionality rule given by a value of 550ºC ±30ºC when the CO₂ volume fraction is 0.04 and ambient temperature ±10ºC when the volume fraction is 0.125. A similar proportionality rules could be achieved when the solids are a mixture of CaO and Ca(OH)₂.

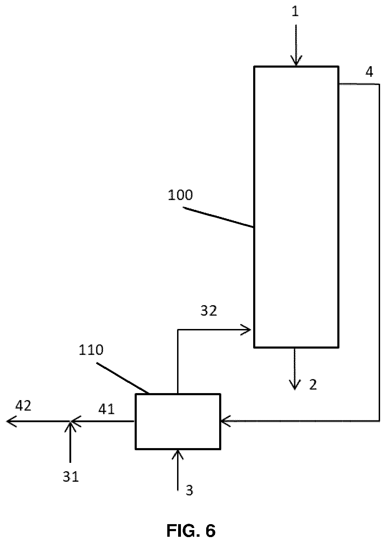

Since most flue gases from energy efficient industrial processes are at mild temperatures, the capture of CO₂ from such gases when CO₂ content is below 8-10%v will require some preheating of the inlet gas (3) before it enters the reactor (100). On the other hand, since in the same conditions the heat released in the carbonation zone (20) at high-temperature comes out as sensitive heat in the decarbonized gas depleted in CO₂ (4), a preferred embodiment of the method involves the preheating of the inlet gas (3) with the hot gas depleted in CO₂ (4) in a gas-gas heat exchanger (110) and the mixing of the heated product gas (41) with ambient air (31) to reduce the temperature of the product gas (42) as indicated in Figure 6.

Figure 5 also indicates that for high CO₂ contents in the gas (CO₂ contents higher than 9%v CO₂ when using CaO and 12.5%v CO₂ when using Ca(OH)₂), some kind of cooling below ambient temperature would be needed of the gas entering the reactor (100), in order to compensate for the excess of energy released during carbonation in the carbonation zone (20) and maintain optimum carbonation temperatures in said zone (20). Since cooling of the flue gas from ambient temperature would not be energy efficient and economic, a preferred method for when the inlet gas (3) has a CO₂ volume fraction between 0.1 and 0.25, is further characterized by the spraying of water (56) at the high temperature region located in the central part of the reactor (carbonation zone (20) in Figure 1A). The Examples below will illustrate the calculation method to of the water flow required to limit the maximum carbonation temperatures to between 600-700ºC, preferably around 650ºC.

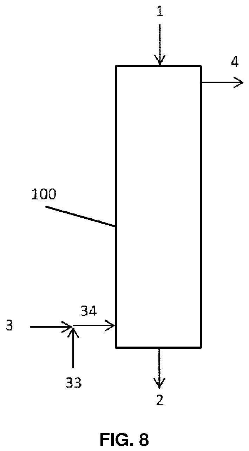

In another preferred embodiment shown in Figure 8, when the gas has a CO₂ volume fraction between 0.1 and 0.25, the method further characterized by the mixing of the flue gas at the inlet gas (3) with ambient air (33) to bring the resulting gas mixture to the CO₂ concentration conditions of described above (see Figure 5) to reach autothermal carbonation temperatures between 600-700ºC in the carbonation zone (20).

In all preferred embodiment discussed to this point the physical and thermal properties of solids, and the characteristics of the gas-solid contact mode is similar to the mild solid and gas preheating regions in lime shaft kilns. Therefore, the teachings of such kilns can be applied to choose superficial gas velocities of the gas (3, 4) in the reactor (100) that ensure a sufficient quality in the heat transfer between gas and solids necessary to develop the preheating zones (10, 30). Attending also to the typical bed porosity between 0.4 and 0.5 of the random packed solids (1) with pellets or stone sizes distribution between 2-10 cm, the method is further characterized by an inlet gas velocity at the gas entrance of the reactor between 0.5-1 m/s measured at normal conditions, so that both pressure drop and heat transfer between gas and solids remains similar as in shaft kilns.

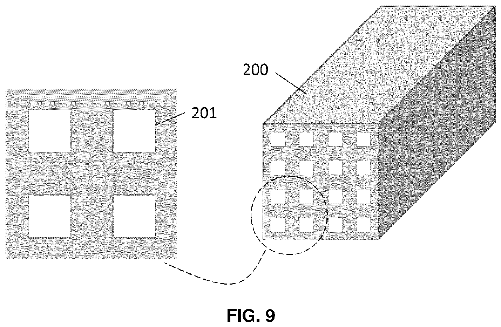

Regarding material's characteristics, Ca-containing solids used in the reactor (100) will be lime rocks produced from the calcination of natural limestone rocks or from recycled carbonated materials, or manufactured from powdered CaO or Ca(OH)₂ in the form of porous pellets or extruded, brick-type or honeycombs (200) with holes or channels (201) as shown in Figure 9, separated by a solid wall of between 20-30 mm (allowing a depth of the carbonated layer of 10-15 mm in each side of the wall) and a bed porosity (determined in this case by the fraction of free crosssection area occupied by the holes or channels (201)) of between 0.15-0.35 sufficient to moderate the pressure drop in the reactor (100) when the gas has CO₂ concentrations between 2-25%v. The possible use of pozzolanic additives for mechanical strength and other additives to enhance porosity and mechanical strength will follow the state of the art of extruding operations of solids in fine particle form.

All preferred embodiment of this invention are valid for the use in the moving reactor of Ca-containing solids containing an intermediate mixture of CaO and Ca(OH)₂. The purpose of such mixture of CaO and Ca(OH)₂ is to achieve a more adequate average enthalpy of carbonation in the reactor so as to have an additional degree of freedom to reach temperatures for carbonation in the autothermal carbonation zone, and adapt it to the gas treated in the reactor. Such average enthalpy of carbonation will indeed range between -69 to -178 kJ/mol Ca depending on the Ca(OH)₂ solid molar ratio varying between 1 and 0.

When the gas contains a small concentration of CO₂ (e.g., less than 2%v), the method of this invention requires inlet gas temperatures that are high and very close to optimum carbonation temperature range of 600ºC-700ºC (see Figure 5 ). However, CO₂ capture efficiencies will be low under such conditions because, even if the gas depleted in CO₂ (4) abandoning the reactor (100) has a concentration of CO₂ at equilibrium with CaO, such concentration will be close to the inlet concentration (note that the equilibrium concentration of CO₂ on CaO is 0.01 at 650ºC and 0.03 atm at 700ºC). Therefore for gases with volume fraction of CO₂ lower than 0.02, the method of this invention will preferably target carbonation temperatures in carbonation zone (20) below 100ºC, where it is known in the state of the art that Ca(OH)₂ can achieve high carbonation conversion under the right reaction conditions and gas-solid contact times. Preferred methods are defined below considering a slow motion of solid in such applications, so as to allow the Ca-containing solids to reach a high carbonation degree despite the low CO₂ concentrations in the gas.

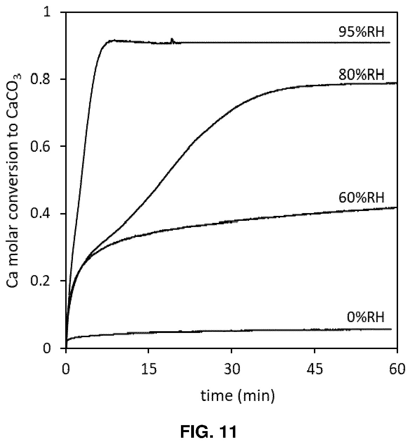

Dedicated experiments have been carried out to characterize the kinetics of carbonation of suitable porous Ca(OH)₂ pellets under the conditions expected when applying the method of this invention. First, some test CaO materials (see Figure 10) confirmed that CaO does not directly carbonate at a useful rate of reaction in contact with a dry gas with CO₂. It is however able to react when the gas contains water vapour, because then the CaO converts first to Ca(OH)₂ using ambient humidity (as shown in Figure 10 at 65ºC and 95% relative humidity) and then Ca(OH)₂ carbonates (as shown in Figure 11). Furthermore, as indicated in Figure 11, dedicated experiments with Ca(OH)₂ in powdered form in a thermogravimetric analyzer (11-12 mg of sample, T=65ºC, 5%v CO₂ and the rest air) revealed the importance of relative humidity (RH in the figure) to both accelerate the carbonation rate and maximize the final value of molar carbonation conversion. These screening test also confirmed the superiority regarding higher carbonation rates and higher maximum conversions of commercially available Ca(OH)₂ materials with surface area higher than 30 m²/g, because the product layer of CaCO₃ formed on Ca(OH)₂ surfaces also have a detrimental effect on rate of carbonation and maximum carbonate conversion.

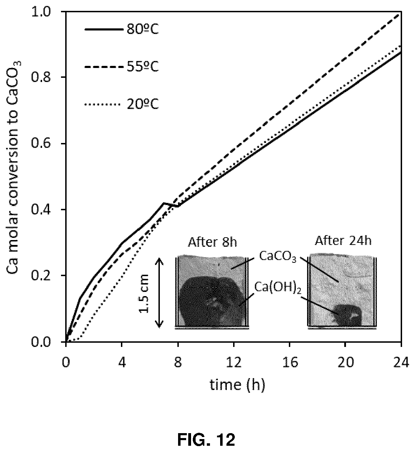

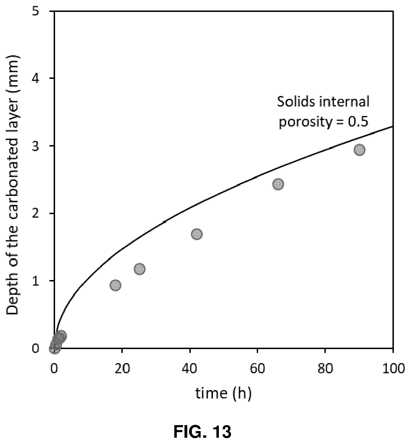

Despite these restrictions, when Ca(OH)₂ is simply mixed with water to make a mortar of Ca(OH)₂, the resulting Ca(OH)₂ porous material, after drying in air at 110ºC, is able to carbonate in humid CO₂ contained air (as shown for Figure 12). Figure 12 is only one illustrative example of such results, for a particular pellet of dry Ca(OH)₂ mortar embedded in a crucible of 1.5 cm diameter and height to expose just the top side to 12%v CO₂ and the rest air saturated in humidity and track the progress of the carbonation reaction front with time. As can be seen, the experimental curves of Ca molar conversion vs. time are almost identical for three different values of temperature (20, 55 and 80ºC in this particular experiment), as long as relative humidity is high (100% in this experiment for all cases). A shrinking core model is observed in the photograph by spraying a phenolphthalein solution (1% weight in ethanol) to dye with colour the unconverted core of Ca(OH)₂ while the region rich in CaCO₃ remains uncolored. As Figure 13 indicates, the experimentally measured depth of the carbonated layer in these porous pellets slowly increases with time even when the pellet is carbonating under ambient air (450-500 ppmv at relative humidities between 40-60%) in reasonable agreement with Fick's diffusion law applied to the CO₂ diffusing in the pores of the external carbonated layer of the pellet (solid line in Figure 13, is the same kinetic model than the one used at higher temperatures in Figure 3 but adapted to the flat geometry of the carbonation front instead of the spherical geometry of Figure 3).The experimental results, fitted with Fick's diffusion law applied to an shrinking core model, indicate that Ca-containing solids with a geometry such as to allow a penetration of the depth of the carbonated layer of 1-3 mm still require a residence times as high as 20-100 hours to approach 90% of their maximum conversion under the low concentration CO₂ of air. The same material exposed to flue gas atmospheres with average 5%v of CO₂ at 650ºC would allow depths of the carbonated layer to reach 10 mm in just 3hours (see Example 2), consistent with what has been discussed around Figure 3 for spherical particles. This means that Ca(OH)₂ in extruded form can also be used as Ca-containing solids in CO₂ capture from flue gases (see Example 2) with characteristic thicknesses between 1-10 mm depending on flue gas concentrations, to achieve carbonation conversions exceeding 0.9 depending on solid residence time, using reactor design methods as described above for spherical shape forms. The use of extruded forms may be justified in applications where there is market for the carbonated extruded forms (i.e. bricks for construction composed of CaCO₃, when the initial Ca(OH)₂ has been fully carbonated). The use of extruded forms also allows a substantial reduction of the reactor volume by allowing the packing of Ca-containing solids with lower bed porosities while maintaining the same gas pressure drop. This could be important in applications of the reactor of this invention in CO₂ capture process in ships for freight transport (see Example 2).

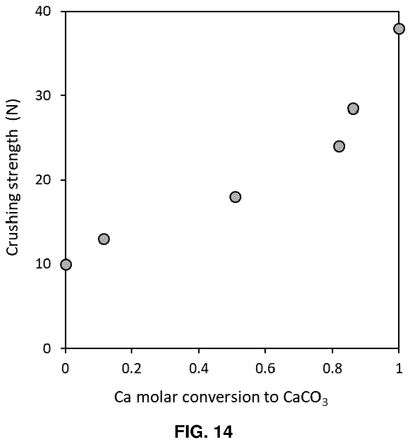

As Figure 14 indicates, the mechanical properties (in terms of crushing strength measured in cylindrical pellets of 5.5 mm height and diameter carbonated in humid air) of dry Ca(OH)₂ porous materials prepared by mixing Ca(OH)₂ with water to make a mortar are enhanced, making them suitable for construction applications. This is qualitatively similar to what happens with other mortar materials containing free lime or free Ca(OH)2, where the Ca molar conversion to CaCO₃ increases with time (known in the state of the art for cementitious materials as CO₂ curing). Indeed, the use of porous of Ca(OH)₂ in different shapes and forms is part of the state of the art and the method of this invention uses such availability of Ca(OH)₂ materials to optimize the CO₂ capture efficiency when applying the method to gases with low concentrations of CO₂ (below 2%v) and at temperatures below 100ºC, as long as the porous Ca(OH)₂ solids has a geometry of the solid such as to expose the external surface of the material to the gas and allow an effective minimum depth of the carbonated layer of 1-3 mm to be developed. For example, flat sheets of material exposed in both sides to the gas, or standard extruded bricks with holes or channels separated by a solid wall of between 2-6 mm (allowing a depth of the carbonated layer of 1-3 mm in each side of the wall) would fulfill such requirement. Therefore, in another preferred embodiment of the method of this invention, the solids entering the reactor (1) are porous Ca(OH)₂ pellets, preferably with a surface area higher than 30 m²/g, the gas is a flue gas (3) with volume fraction between 0.005 and 0.04 and temperatures between ambient temperature and 70ºC further characterized by water spraying at the entrance of the gas and in the central part of the reactor carbonation region to maintain maximum temperatures below 70ºC and relative humidity between 80-100%.

In another preferred embodiment, the gas is air-humidified at ambient temperature, with CO₂ content between 400-500 ppmv, or vitiated air or flue gases at close to ambient temperature with a CO₂ content between 500 to 5000 ppmv and relative humidity between 80-100%, entering the reactor at 5-10 m/s, the solids being contained in the form of extruded honeycombs or bricks, plates or bags with an effective minimum depth of the carbonated layer of 1-3 mm.

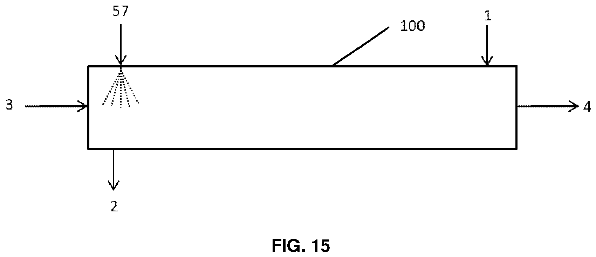

The preferred intervals adopted in the previous paragraph come from the need to use high superficial gas velocities when targeting relevant capture flows of CO₂ for climate change mitigation purposes (i.e. requiring vast flows of air of at least 50000 Nm³/s to capture CO₂ at a rate of 1 Mt CO₂/y). Since the molar flow of CO₂ is low when feeding to the reactor a given flow of gas (3) with a low concentration of CO₂, the molar flow of Ca(OH)₂ (1) to be carbonated is proportionally small and the residence time of such Ca(OH)₂ in the carbonation zone (20) can increases inversely proportional to such small solid flow, to reach values as high as 100 hours when targeting depth of the carbonated layer of 1-3 mm (see Figure 13). The need to moderate the pressure drop in the carbonator reactor (100) requires a sufficient bed porosity (0.6-0.8) and geometry (honeycombs, sheets, plates etc.) of the porous Ca(OH)₂. A horizontal configuration of the reactor (100) may be more convenient to accommodate the long reactors (see EXAMPLE 4), required for air capture, as shown in Figure 15.

Examples of design provided below are non-restrictive, as they are used to illustrate some particular choices of design and application of some preferred embodiments of the invention under the assumptions stated above.

### EXAMPLES

### EXAMPLE 1. Reference case using CaO Ca-containing solids.

This is an example where Ca-containing solids (1) of CaO are fed to the carbonator reactor (100) to capture a target of 50 tCO₂ per day from a typical combustion flue gas at the inlet gas (3) with 8.5%v fraction of CO₂ and at 157ºC. Such CO₂ capture rate represents 85% of the CO₂ entering the reactor. It also fixes the flow rate of gas at 4.08 Nm³/s at standard normal conditions (0 ºC, 1 atm) and the average CO₂ volume fraction between inlet and outlet at 0.060, as obtained from the axial concentration profiles of CO₂ in the gas phase solved with the countercurrent reactor model combined as shown in Figure 2A, using the shrinking core model as in Figure 3. The porous CaO stones or pellets are assumed to have a diameter of 0.04 m and open porosity of 0.6 (which is achievable from by calcination of existing limestones or pelletized limestones with a porosity of 0.12 in the carbonate). When fully carbonated, they are assumed to reach a maximum calcium molar conversion of 0.60. This is also the carbonate content in the external carbonated shell of the lime stones or pellets as soon as they start carbonating. A mass balance on carbon fixes the flow rate of solids (1) at 106 t CaO/day. In these conditions, the solution of the heat balance in the CaO first preheating zone (10) yields a temperature for the gases at the exit of the reactor of T_{g,out}=528ºC. The previous inlet conditions have been chosen as to translate in the generation of an autothermal high-temperature carbonation zone (20) in the central part of the reactor (100) with a maximum temperature, Tₘₐₓ, identical to 650ºC considered in the state of the art as optimum for carbonation. Conveniently, this temperature is lower than the equilibrium temperature for CaCO₃ decomposition at the point with the lowest CO₂ partial pressure in the reactor (i.e., at the exit) when capturing 85% of the CO₂ (which means in this case a CO₂ concentration at the exit of 0.014 being the equilibrium at T_{Max} of 0.01). However, higher capture efficiencies are to be expected, as certain carbonation could occur in the first preheating zone (10) as the equilibrium at T_{g,out} is of only 0.0004 atm.

By fixing the gas velocity at 1 m/s at normal gas inlet conditions, the cross-section of the reactor results in 4.08 m². The length of carbonation zone provides a final design of the reactor and allows the estimation of the pressure drop. To determine the length of the carbonation reaction zone, it is necessary to establish the time required to reach 90% of carbonation conversion in the CaO, as adopted in the reference design at the average CO₂ concentration found by the solids in their movement countercurrent respect to the gas. To construct the conversion vs time curve of Figure 3, the diffusivity of CO₂ in air is calculated at 650ºC (yielding 1.13 10⁻⁴ m²/s) and the porosity of the carbonated layer forming in the exterior of the Ca-containing solids is calculated to be 0.28 from the initial assumed porosity (0.6) and the molar densities of CaCO₃ and CaO. In these conditions, the shrinking core model for spheres predicts 8.31 hours to reach 90% of the maximum carbonate conversion in the Ca-containing solids (i.e., an average molar conversion of 0.60 in the Ca-containing solids). Therefore, to ensure such residence time of the Ca-containing solids in the carbonation zone (20) of the reactor it is necessary that the volume of the carbonation zone (20) at high temperature is 45.9 m³, considering a bed porosity of 0.4, or 11.3 m of reactor reaction zone height. The Ergun's equation predicts a pressure drop of just 0.20 atm in such region, at the gas velocity of 3.4 m/s at the inlet temperature conditions of the carbonation reaction region.

Note that the previous example is non-restrictive and the skilled in the art will know how to adapt it to many other applications. There is a large margin to adapt the design of the reactor to the specific characteristic of the Ca-containing solids. For examples: Ca-containing solids with an effective diffusion coefficient of CO₂ in the Ca-containing solids that is ¼ than the assumed gas diffusion coefficient of CO₂ in air, will have to have 1/2 of the diameter of the Ca-containing solids assumed above to maintain identical conversion vs time curve in the shrinking core model. An interest outcome from this design exercise, is that there is a practical limit for the initial porosity of the CaO Ca-containing solids, and high porosity materials are favoured as long as they maintain suitable reactivity and crushing strength to be handled in moving beds. For example, for a maximum calcium molar conversion of 0.60 when carbonating active CaO from a single calcination cycle, a porosity CaO of 0.46 would require two orders of magnitude longer residence time (and hence reactor volume) to achieve the same objectives of capture than those described in the example. Reducing the activity of the material (i.e., to lead to maximum carbonation conversions below 0.5) would solve the pore plugging limit, but would translate into a less effective use (conversion) of the solids to carbonate, which is not optimum if the method is applied to capture CO₂ from disperse industries requiring transport of the sorbent. Low maximum conversion of the Ca-containing solids (as it happens with highly cycled particles in standard Calcium Looping systems) could only be a practical solution for CO₂ capture when the source of CO₂ (the emitter of the gas at the inlet gas (3)) is near to the calciner plant required to produce pure CO₂ and CaO from the carbonated material.

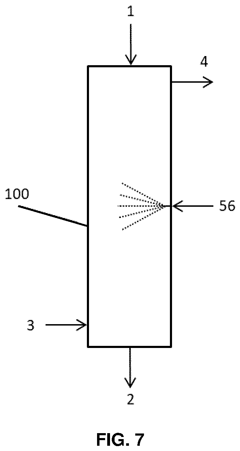

Another interest outcome from this example is that there is a CO₂ concentration limit for the gas entering the reactor: higher concentrations of CO₂ will lead to higher adiabatic maximum temperatures calculated in the autothermally generated carbonation zone (20) at high temperature. For this example, it can be seen such adiabatic temperature is calculated to be 722ºC in this example when the CO₂ content at the inlet gas (3) is 9.5%v. According to the equilibrium of CO₂ on CaO, the concentration of CO₂ in the gas phase would not go below 4.7%v at such temperature in such region, thereby reducing the capture efficiency and/or the effectiveness of the reactor as a reactor, as increasing volumes of reactor at such equilibrium temperature would become inactive for CO₂ capture. In the case of treating gases with CO₂ volume fractions higher than 9%v using the referred solids and conditions, the methods of cooling by spraying water (Figure 7) or by diluting the inlet gas with air should be applied (Figure 8). In this example, to cool the carbonation zone to 650ºC when the CO₂ content at the inlet gas (3) is 9.5%v, a 0.05 kg/s of liquid water (56) at ambient temperature is required to be sprayed in the carbonation zone (20) at high temperature, or 0.45 Nm³/s of air (33) to be diluted into the inlet gas to reduce the CO₂ fraction to 8.5%v. Similar proportionality rules for higher CO₂ contents in the inlet gas (3) could be achieved.

### EXAMPLE 2. Reference case using Ca(OH)₂ Ca-containing solids.

This example has been chosen to illustrate a similar design exercise as in Example 1, when the Ca-containing solids is porous Ca(OH)₂ in the form of extruded, brick-type, honeycombs with holes or channels (as in Figure 9), being all the rest parameters as in Example 1. The lower enthalpy of carbonation of Ca(OH)₂ would translate into a maximum temperature in the carbonation zone (20) of only T_{Max}=432ºC. Since this is not optimum for maximum conversion of the solids, it is preferred in this example to feed the flue gases in the inlet gas (3) at higher temperatures. Therefore, heat from the gas depleted in CO₂ (4) exiting the reactor (100) is supplied to the incoming flue gas at the inlet gas (3) in a gas-gas heat exchanger (110) as shown in Figure 6. For an average molar conversion of 0.60 in the Ca-containing solids and a temperature in the carbonation zone of Tₘₐₓ=650ºC, the flue gas (32) has to be pre-heated up to 373ºC before entering the reactor (100) yielding a temperature for the gases at the exit of the reactor of T_{g,out}=401 ºC. This is sufficiently high to ensure a sufficient ΔT in the gas-gas heat exchanger (110). Conveniently, the incoming flue gas temperature is higher than the equilibrium temperature for Ca(OH)₂ decomposition in the flue gas atmosphere (assumed to have 10%v of water vapor), which is 412 ºC according to Barin's equation, avoiding the possible re-hydration of the un-carbonated solids coming from the carbonation zone (20) at 650ºC (above the Ca(OH)₂ decomposition temperature in water vapor of 519ºC).

When Ca-containing solids of pure Ca(OH)₂ are used, the open porosity of the carbonated layer forming in the exterior of the Ca-containing solids is calculated to be 0.57 from the initial assumed porosity (0.6) and the molar densities of CaCO₃ and Ca(OH)₂. This superior carbonated layer porosity for Ca(OH)₂ solids compared to CaO of Example 1 enables for lower residence times or the possibility of more compact bed arrangements, as the solids are extruded, brick-type, honeycombs with depths of the carbonated layer 0.01-0.015 m and reasonable residence times, which is a clear advantage in the use of Ca(OH)₂ solids instead of CaO. Said compact arrangements of extruded solids will be particularly beneficial when the carbonator is operated in a location where minimum reactor volumes will be preferable, such in a ship used for freight transport. The shrinking core model for flat surfaces predicts that 2.9 hours are needed for a maximum calcium molar conversion of 0.60 and a 0.01 m depth of carbonated layer (i.e. 0.02 m of wall thickness). Therefore, to ensure such residence time (or average residence time in a semi-continuous feeding of batches of extruded Ca(OH)₂ solids) of the Ca-containing solids in the carbonation zone (20), a volume of the carbonation zone of 25.6 m³, or 6.3 m of reactor height, are required for a bed porosity of 0.25 (i.e. square voids of 0.02 m, as in Figure 9) with a pressure drop of just 0.01 atm for such region calculated by considering the square geometry of the gas channels (201) and typical friction factors.

### EXAMPLE 3. Particular case for gas polishing applications using Ca(OH)₂ Ca-containing solids.

The method of this invention, in particular when using the ability of porous Ca(OH)₂ to extensively carbonate at temperatures below 100ºC, allows for deep decarbonisation of gases that have a low content of CO₂. This can be valuable for many applications, in particular as a "gas polishing" option to remove CO₂ downstream of other capture systems, where approaching very high capture efficiencies ("zero emissions") is not economically viable. The very low specific cost of the sorbent material used in the method of this invention, and the mild temperatures reached in the carbonation zone when the CO₂ inlet concentration is low, allow for very large inventory of solids in the reactor. For example, for a flue gas inlet concentration of 1% vol of CO₂ at 50ºC (i.e. 6.93 Nm³/s of flue gas target a capture of 10 tCO₂/day) and a 98.5% relative humidity (i.e. 12% vol H₂O), porous pellets of Ca(OH)₂ of 2.5 cm of diameter and porosity of 0.6 are used. Smaller diameter pellets than in Example 1 are convenient in this example to enhance carbonation rates at the lower CO₂ concentrations. The pellets are assumed to have a maximum calcium molar conversion of 0.81 at relative humidities (above 80% according to Figures 11 and 12).

As in the previous Examples, the CO₂ capture efficiency is of 85%, meaning in this case a CO₂ concentration at the exit of just 0.15%v CO₂. From the heat balances, T_{gas,out} and Tₘₐₓ of 69ºC and 71ºC are calculated, respectively. Despite the low CO₂ inlet concentration, this temperature increment would reduce the relative humidity to below 44% at the exit, thus minimizing the carbonation conversion. Therefore, to maintain maximum temperatures below 55ºC and relative humidity above 80%, liquid water is sprayed at different locations inside the reactor. To maintain relative humidity between of 80 and 97%, sprays of 0.015 kg/s at carbonation zone dimensionless heights of 0.43, 0.69, 0.86 and 0.97 are required considering the solids conversion profile in Figure 2A. This results in a moderate increment in Tₘₐₓ to 55ºC, and T_{gas, out}=54ºC, ensuring that relative humidity can be controlled above 80% while avoiding the condensation of liquid water that would otherwise flood the Ca(OH)₂ pores and drastically reduce carbonation rates. According to the shrinking core model used to describe the carbonation kinetics of these porous solids, about 17.5 hours are needed to reach a conversion of 90% in these Ca-containing solids. Such long residence time can be achieved in a reactor with a cross-section of 4.7 m² operated with a gas velocity of 1.5 m/s at normal conditions and 1.80 m/s at Tₘₐₓ in the carbonation zone (20). The length of such carbonation zone (20) will be 6.11 m (for a bed porosity of 0.4) and the pressure drop about 0.14 atm (i.e., similar as in Example 2).

### EXAMPLE 4. Particular case for CO₂ capture from air using Ca(OH)₂ Ca-containing solids

The method of this invention allows for CO₂ capture from air or from vitiated air coming out from buildings or other sources. As in Example 3, the mild temperatures reached in the carbonation zone when the CO₂ inlet concentration is extremely low, allow for very large inventory of solids in the reactor. For example, for atmospheric air with a CO₂ concentration of 500 ppmv at 20ºC (i.e. 64.6 Nm³/s of flue gas when we target a capture of 1000 tCO₂/year) that has been saturated to a 99% relative humidity (i.e. 2.1% vol H₂O), Ca-containing solids of Ca(OH)₂ arranged in the form of extruded, brick-type, honeycombs with 6 mm of thickness (i.e., 3 mm of depth of the carbonated layer) with a solids porosity of 0.6 and a bed porosity of 0.7 (i.e., square voids of 30 mm length) to moderate the pressure drop accounting for the larger flow of atmospheric air to be treated when compared to higher CO₂ contents as in Example 2. Ca-containing solids are assumed to have maximum calcium molar conversion of 0.90 at relative humidities (above 80% according to Figures 11 and 12).

A modest CO₂ capture efficiency of 50% is assumed considering the extremely low CO₂ exit concentration. From the heat balances, T_{gas,out} and Tₘₐₓ of just 21ºC are calculated respectively ensuring relative humidity above 90% when the CO₂ containing air is saturated in humidity before entering the carbonation reaction zone as shown in Figure 15. According to the shrinking core model for flat plates, about 103 hours are needed to reach a complete conversion of these Ca-containing solids. Such long residence time can be achieved in a reactor with a cross-section of 6.5 m² operated with a gas velocity of 10 m/s at normal conditions. The length of such carbonation zone (20) will be 12.7 m and the pressure drop just about 0.024 atm.

Note that there is a large margin to adapt the design of the reactor to the specific characteristic of the ppmv CO₂ in the air. For example, vitiated air containing 2000 ppmv CO₂ will simply require 1/4 the cross-section area and 1/4 the residence time in the reactor when all the rest parameters are maintained.

## Claims

1. A method for capturing the CO₂ from a gas entering a thermally insulated packed bed reactor of Ca-containing solids (1), composed of CaO, Ca(OH)₂ or mixtures thereof capable to react to form CaCO₃ and obtain a gas depleted in CO₂ (4) at a reactor gas exit; wherein the Ca-containing solids are arranged in the form of porous Ca-containing solids, such as lime rocks, extruded bricks or plates made with mortars, or in powder form inside porous bags; said Ca-containing solids having, when calcined, internal porosities connected to the exterior surface of the solids ranging between 0.45-0.7 and internal surface areas higher than 10 m²/g, **characterized in that** the method comprises the following steps:
i. feeding the Ca-containing solids (1) to the reactor gas exit at a molar rate of 1-2 times the molar rate of CO₂ contained in the gas, and
ii. discharging the CaCO₃-containing solids from a gas inlet (3) of the reactor (100),
such that a countercurrent movement of the gas respect to the solids (1) is generated; and
iii. providing a residence time of the solids in the reactor between 1-200 hours.

2. The method according to claim 1, wherein the Ca-containing solids (1) have an effective particle diameter or thickness between 10 to 100 mm and their residence time in the reactor (100) is between 1-20 hours.

3. The method according to claim 2 wherein the Ca-containing solids (1) are CaO, the gas is a flue gas with CO₂ volume fraction between 0.02 and 0.1, and the inlet temperature of the gas follows a proportionality rule given by a value of 560ºC±40ºC when the volume fraction is 0.02, and a value of ambient temperature ±10ºC when the volume fraction is 0.1.

4. The method according to claim 2, wherein the solids (1) are Ca(OH)₂ and the gas is a flue gas with CO₂ volume fraction between 0.04 and 0.12, and the inlet temperature follows a proportionality rule given by a value of 550ºC ±30ºC when the CO₂ volume fraction is 0.04, and ambient temperature ±10ºC when the volume fraction is 0.12.

5. The method according to claim 2 wherein the solids (1) are a mixture of CaO and Ca(OH)₂, the gas is a flue gas with CO₂ volume fraction between 0.02 and 0.1, and the inlet gas temperature and CO₂ concentration follows a proportionality rule given by a value of 560ºC±40ºC when the volume fraction is 0.02, and a value of ambient temperature ±10ºC when the volume fraction is 0.1, for CaO, and the gas is a flue gas with CO₂ volume fraction between 0.04 and 0.12 and the inlet gas temperature and CO₂ concentration follows a proportionality rule given by a value of of 550ºC ±30ºC when the CO₂ volume fraction is 0.04, and a value of ambient temperature ±10ºC when the volume fraction is 0.12, for Ca(OH)_{2.}

6. The method according to any one of claims 3 to 5 further comprising a heat exchanging step wherein the gas discharged from the reactor (100) enters a heat exchanger to supply heat to the gas fed to the reactor (100).

7. The method according to claim 2, wherein the gas has a CO₂ volume fraction between 0.1 and 0.25, and the method further comprises a step of spraying water at a carbonation zone (20) located in a central part of the reactor (100), so as to limit the maximum carbonation temperatures to between 600-700ºC, preferably around 650ºC.

8. The method according to claim 2, wherein the gas has a CO₂ volume fraction between 0.1 and 0.25, and the method further comprises a step of mixing the flue gas with ambient air.

9. The method according to any one of claims 2-8 wherein an inlet gas velocity at the gas inlet (3) of the reactor (100) is between 0.5-1 m/s measured at normal conditions.

10. The method according to claim 1 wherein the solids are Ca(OH)₂, the gas is a flue gas with volume fraction between 0.005 and 0.04 and temperature between ambient temperature and 70ºC and the method further comprises a step of spraying water at the gas inlet (3) and at a carbonation zone (20) located in a central part of the reactor (100) so as to maintain maximum temperatures below 70ºC and relative humidity between 80-100%.

11. The method according to claim 1, wherein the Ca-containing solids (1) are Ca(OH)₂ contained in the form of extruded bricks or honeycombs, plates or bags with an effective thickness of 1-10 mm.

12. The method according to claim 11, wherein the gas is humidified air at ambient temperature, with CO₂ content between 400-500 ppmv, or vitiated air or flue gases at close to ambient temperature with a CO₂ content between 500 to 5000 ppmv and relative humidity between 80-100%, entering the reactor at 5-10 m/s, and the solids are Ca(OH)₂,.

13. The method according to any one of claims 1 to 12 further comprising a step of estimation of a residence time required to achieve the target carbonation conversion of the Ca-containing solids.

14. The method according to claim 13, wherein the range of CO₂ concentrations in the inlet gas (3) is between 500 ppmv (air) to 25%v, and the temperature between of CO₂ between 20-650ºC T_{g,in} and wherein the step of estimation of a residence time required to achieve the target carbonation conversion of the Ca-containing solids comprises the following steps:
- a step of estimation, from the carbon mass balance, of the flow of solids (1) to capture the targeted flow of CO₂ from the inlet gas (3);
- a step of calculation of a first energy balance to estimate the outlet temperature T_{g,out} of the gas depleted in CO₂ (4) generated in the reactor leaving the reactor (100) as sensitive heat in the gas depleted in CO₂ (4) assuming that the carbonated solids (2) leave the reactor at the same temperature as the gas at the inlet gas (3) enters the reactor (100);
- a step of calculation of a second energy balance to estimate a maximum temperature Tₘₐₓ, attainable in a carbonation zone (20) located in a central part of the reactor (100), considering the outlet temperature T_{g,out} of the gas depleted in CO₂ (4) of the step of calculation of the first energy balance, and assuming that the solids leave the reactor (100) at the inlet temperature of the gas, i.e.: T_{s,out}=T_{g,in}.
- a step of estimating a required length of the carbonation zone (20) with a kinetic model for such temperature for the chosen properties of the Ca-containing solid acting as CO₂ sorbent.

15. Device to carry out the method of any one of claims 2 to 10 **characterized in that** it comprises:
- a supply line of Ca-containing solids (1) containing CaO or Ca(OH)₂, or a of mixture thereof,
- a discharge line of CaCO₃ containing solids (2),
- a gas inlet (3) of gas containing CO₂ connected to the discharge line of CaCO₃-containing solids;
- a discharge line of gas depleted in CO₂ (4) that is connected to the supply line of Ca-containing solids to the reactor (100);
- a moving bed of solids (10, 20, 30) wherein the Ca-containing solids move downwards by gravity under adiabatic conditions.

16. Device to carry out the method of claim 12 **characterized in that** it comprises
- a supply line of Ca-containing solids (1) containing Ca(OH)₂ (1),
- a discharge line of CaCO₃ containing solids (2),
- a gas inlet (3) of air or vitiated air connected to the discharge line of CaCO₃-containing solids (3);
- a discharge line of air depleted in CO₂ that is connected to the supply line of Ca-containing solids to the reactor (100);
means configured to move the Ca-containing solids (5) from a first end to a second end of the device or means configured to move a wall of the device with respect to the solids.
